# EUROPÄISCHE PATENTSCHRIFT

(11) **EP 0 980 493 B1**
(45) Veröffentlichungstag und Bekanntmachung des Hinweises auf die Patenterteilung: **10.04.2002**
(21) Anmeldenummer: 98925530.2
(22) Anmeldetag: 04.05.1998
(51) Int. Cl.: F21V 17/02, F21V 13/06

(54) **STRAHLUNGSLEITSYSTEM, INSBESONDERE BELEUCHTUNGSSYSTEM**
RADIATION DEFLECTING SYSTEM, IN PARTICULAR LIGHTING SYSTEM
SYSTEME DE GUIDAGE DE RAYONNEMENTS, NOTAMMENT SYSTEME D'ECLAIRAGE

(43) Veröffentlichungstag der Anmeldung: 23.02.2000
(73) Patentinhaber: Zumtobel Staff GmbH, 6851 Dornbirn (AT)
(72) Erfinder: DOZSA-FARKAS, Andras, D-80686 München (DE); FLECKENSTEIN, Sybille, D-65193 Wiesbaden (DE)
(74) Vertreter: Schmidt-Evers, Jürgen, Dipl.-Ing.
(86) Internationale Anmeldenummer: EP9802630
(87) Internationale Veröffentlichungsnummer: WO9850732

(56) Entgegenhaltungen:
- EP-A- 0 652 399
- WO-A-87/06995
- GB-A- 862 073
- GB-A- 2 229 291
- US-A- 4 337 506

## Beschreibung

Die Erfindung befaßt sich mit einem Strahlungsleitsysem, insbesondere einem Beleuchtungssystem, mit wenigstens einer Strahlungsquelle, insbesondere Lichtquelle, welche parallel gerichtete Strahlung, insbesondere einen Lichtstrahl abgibt, bei dem im Strahlengang der Strahlungsquelle mehrere teildurchlässige Spiegel als Strahlungsverteilerelemente beabstandet angeordnet sind, welche einen Teil der Strahlung, insbesondere des Lichts, an vorbestimmte, gewünschte Stellen richten.

Obgleich bei der Erfindung hauptsächlich das Einsatzgebiet eines Beleuchtungssystems im Vordergrund steht, können nach den Prinzipien der Erfindung auch andere Strahlungen, wie Infrarotstrahlungen oder dergleichen räumlich verteilt weitergeleitet und abgezweigt werden.

Bei dem Hauptanwendungsgebiet der Beleuchtung war es bisher üblich, in den zu beleuchtenden Räumen, Hallen oder dergleichen Leuchtmittel vorzusehen, welche mit einer entsprechenden Stromquelle und den entsprechenden Schaltereinrichtungen zu verbinden sind. Hierzu war es erforderlich, elektrische Stromleitungen zu den gewünschten Anschlußstellen für die Leuchtmittel zu verlegen, die im Falle von räumlichen Veränderungen ständig neu verlegt werden mußten. Bei den üblichen Auslegungsformen für die Beleuchtung wurde der Strom zu den Leuchten oder Leuchtmitteln geschickt, so daß eine Vielzahl von entsprechenden Stromanschlüssen entsprechend der Anzal von anzubringenden Beleuchtungsmitteln und Beleuchtungskörpern erforderlich war. Dies ist nicht nur umständlich, sondern auch zeitaufwendig und insbesondere ist hierbei eine effektive und energiebewußte Nutzung fraglich.

Bei einem bekannten Strahlungsleitsystem der eingangs genannten Art (US-A-4,337,506) sind mehrere kardanisch gelagerte teildurchlässige Spiegel im Strahlengang einer Lichtquelle hintereinander angeordnet. Die kardanische Lagerung erlaubt eine Verstellung der Spiegel, um zwei senkrecht zur Strahlenachse der Lichtquelle sowie senkrecht zueinander verlaufende Drehachsen und gewährleistet, daß der entsprechende Anteil jedes Spiegels in jede strahlenoptisch mögliche Richtung gelenkt werden kann.

Demgegenüber liegt der Erfindung die Aufgabe zugrunde, ein Strahlungsleitsystem, insbesondere ein Beleuchtungssystem bereitzustellen, welches sich durch eine große Flexibilität beim Einsatz auch bei großen Räumen oder zurückzulegenden Wegen auszeichnet und die Möglichkeit eröffent, jedem teildurchlässigen Spiegel ein optisches Element nachschalten zu können.

Die Lösung besteht darin, daß die teildurchlässigen Spiegel vorzugsweise auswechselbar und daß sie um die Strahlungsachse verdrehbar sind.

Beim erfindungsgemäßen Strahlungsleitsystem wird die Strahlung bzw. das Licht von einer einzigen oder gemeinsamen Strahlungsquelle bzw. einer Lichtquelle zu dem als Spot ausgebildeten Strahlungsverteilerelement übertragen und nicht der Strom für die einzelnen Beleuchtungsmittel als Energieträger genutzt. Wesentlich bei dem erfindungsgemäßen System ist die Tatsache, daß mittels mehreren teildurchlässigen Spiegeln ein beispielsweise wählbarer Anteil der von der Strahlungsquelle gelieferten und parallel gerichteten Strahlung abgezweigt und zu einer gewünschten Stelle gerichtet wird, während der restliche Teil der Strahlung ungehindert durch den teildurchlässigen Spiegel durchgeht und zu einem weiteren teildurchlässigen Spiegel übertragen wird. Hierdurch reicht es bei dem erfindungsgemäßen Strahlungsleitsystem aus, eine gemeinsame Strahlungsquelle, wie beispielsweise eine Lichtquelle, an einer geeigneten Stelle zu installieren, während die entsprechenden Ausleuchtungen bei einem Beleuchtungssystem dann mittels sogenannten Strahlungsverteilerelementen vorgenommen werden, welche als wesentliche Bauelemente einen teildurchlässigen Spiegel umfassen. Durch die entsprechende Wahl des Durchlässigkeitsgrades des teildurchlässigen Spiegels kann dann ein entsprechend gewünschter und erforderlicher Anteil der von der Strahlungsquelle kommenden, parallel gerichteten Strahlung zu einer jeweils gewünschten Stelle abgezweigt werden. Insbesondere auch bei Renovierungsarbeiten sowie dem Ausbau und Umbau von Gebäuden und anderen Einrichtungen lassen sich hierbei Elektroinstallationsarbeiten wesentlich verringern und es werden auch keine aufwendig zu verlegenden Einzelelektroleitungen zu den Leuchtmitteln benötigt, da die gemeinsame Strahlungsquelle bzw. Lichtquelle an einer geeigneten Stelle zentral angeordnet und installiert wird. Auch ist dieses System nicht nur flexibel, sondern auch wartungsfreundlich, da nach der Installation sich die erforderlichen Wartungsarbeiten auf die Installationsstelle der Strahlungsquelle beschränken.

Vorzugsweise kann bei dem erfindungsgemäßen Strahlungsleitsystem jedem teildurchlässigen Spiegel, welches das Kernstück des Strahlungsverteilerelementes darstellt, wenigstens ein ggfs. auswechselbares optisches Element, wie eine Linse, Filter, Dia oder dergleichen, nachgeschaltet sein. Mit Hilfe von diesen Zusatzeinrichtungen in Form von variierbaren optischen Elementen läßt sich der mittels des teildurchlässigen Spiegels abgezweigte Teilstrahl bündeln oder streuen, und es lassen sich mit Hilfe von Farbfiltern entsprechende Farbeffekte erzielen oder es lassen sich auch Dias im abgezweigten Strahlengang an eine gewünschte Stelle projizieren. Diese dem teildurchlässigen Spiegel nachgeschalteten optischen Elemente sind frei in Abhängigkeit von den jeweils gewünschten Anforderungen und Gegebenheiten wählbar.

Vorzugsweise ist der jeweilige teildurchlässige Spiegel um zwei Achsen drehbar, welche einen Winkel von 90° zueinander einschließen, wobei die eine Achse in Richtung des Versorgungsstrahls weist und in der anderen Achsrichtung der Winkel des Spiegels zum Versorgungsstrahl variierbar ist, so daß der halbdurchlässige Spiegel einerseits um die Strahlungsachse der parallel gerichteten Strahlung drehbar und verschwenkbar ist und andererseits ferner derart im Winkel veränderbar ist, daß die hiermit abgezweigte Teilstrahlung räumlich variabel auf die gewünschten Stellen gerichtet werden kann.

Zur Verdrehung des jeweiligen teildurchlässigen Spiegels um die Strahlungsachse, d.h. die vorstehend genannte erste Achse, ist vorzugsweise eine bogenförmige, insbesondere etwa halbkreisförmig ausgebildete Trag- und Führungseinrichtung vorgesehen. Diese ist derart gestaltet, daß hiermit ein möglichst großer Dreh- und Schwenkbereich variabel erfaßt wird und dennoch eine optisch ansprechende Gestaltgebung vorhanden ist. Vorzugsweise ist diese Trag- und Führungseinrichtung aus einem Dreieckprofilmaterial ausgebildet.

Insbesondere ist nach der Erfindung das Strahlungsleitsystem derart ausgelegt, daß die Trag- und Führungseinrichtung, vorzugsweise über eine Teleskopverbindung, an einer Festfläche, wie einer Wand, Decke oder dergleichen, montierbar ist. Diese Teleskopverbindung dient somit dazu, daß die Trag- und Führungseinrichtung in je einem gewünschten und veränderbaren Abstand von einer Festfläche angeordnet werden kann, um eine Feinjustierung der Anordnung nach der Erfindung zu ermöglichen.

Zur Positionsfeststellung von Teleskopverbindung und Trag- und Führungseinrichtung ist vorzugsweise eine Exzentereinrichtung vorgesehen, so daß die Trag- und Führungseinrichtung in der jeweils gewünschten Position zuverlässig ausgerichtet und festgestellt werden kann. Insbesondere ermöglicht eine derartige Verbindung, daß man eine variable Positionsfestlegung vornehmen kann, welche sich auch noch nachträglich verändern läßt.

Zweckmäßigerweise sind die dem teildurchlässigen Spiegel nachgeschalteten optischen Elemente an einem Träger verstellbar gelagert. Dieser Träger ist vorzugsweise als Aufnahmeschiene ausgebildet. Auf diese Weise sind die nachgeschalteten, optischen Elemente hinsichtlich ihrer Lage und Zuordnung zu dem teildurchlässigen Spiegel veränderbar, und sie sind insbesondere auch austauschbar, so daß man die jeweils gewünschten optischen Elemente in Abhängigkeit von dem Anwendungszweck und der vorbestimmten Einsatzweise wählen und zusammenstellen kann.

Gemäß einer vorteilhaften Ausgestaltungsform des Strahlungsleitsystems nach der Erfindung sind die Drehlagerungen für den teildurchlässigen Spiegel und der Träger für die nachgeschalteten, optischen Elemente zu einer Funktionseinheit zusammengefaßt. Hierdurch wird erreicht, daß die nachgeschalteten optischen Elemente, wie Spiegel, Linsen oder dergleichen, automatisch nach Maßgabe des Ausfallwinkels zueinander geführt werden, so daß nach der Erstinstallation keine weiteren Nachjustierungen mehr erforderlich sind. Vorzugsweise sind die Drehlagerung für den teildurchlässigen Spiegel und der Träger für die nachgeschalteten optischen Elemente über ein Gelenk als mechanische Einrichtung verbunden, so daß der Träger für die optischen Elemente über eine Mechanik unter entsprechender Zuordnung zur Drehstellung des teildurchlässigen Spiegels mit diesen Drehlagerungen bewegungsgekoppelt ist.

Mit Hilfe dieser erfindungsgemäßen Ausgestaltungsform bildet die Drehbewegungseinrichtung für den teildurchlässigen Spiegel mit den nachgeschalteten optischen Elementen nicht nur eine Funktionseinheit, sondern auch eine körperliche Baueinheit, so daß sich die Montage des Gesamtsystems dahingehend vereinfacht, daß man an den jeweils gewünschten Stellen jeweils ein komplettes Strahlungsverteilerelement konzipiert und anbringt, welches dann auf die jeweils gewünschten Erfordernisse abgestimmt und angepaßt werden kann. Somit braucht man nicht individuell für den jeweiligen Anwendungszweck gestaltete Strahlungsverteilerelemente vorzusehen, sondern man hat eine Grundbauform, welche dann wunschgemäß abgeändert und auf den Anwendungsfall abgestimmt werden kann.

Bei einem Beleuchtungssystem wird vorzugsweise als Strahlungsquelle eine Hochleistungs-Lichtquelle vorgesehen, welche beispielsweise von einer Bogenlampe, insbesondere einer Halogen-Metalldampflampe, einer Argon-Schwel-Lampe oder dergleichen, insbesondere beispielsweise auch durch eine Einspeisung von Sonnenlicht, gebildet werden kann.

Selbstverständlich ist das erfindungsgemäß wesentliche Strahlungsleitsystem auch für andere Strahlungsarten zu deren Weiterleitung ohne spezielle Lichtleiter geeignet, und als Strahlungsquelle kann man beispielsweise eine Infrarotlichtquelle oder dergleichen an einer geeigneten Stelle vorsehen.

Zusammenfassend ist das Grundprinzip des Strahlungsleitsystems nach der Erfindung darin zu sehen, daß man ausgehend von einer einzigen Strahlungsquelle, wie einer Lichtquelle, welche eine parallel gerichtete Strahlung oder einen parallel gerichteten Lichtstrahl abgibt, an mehreren vorbestimmten und wählbaren Stellen im Verlauf der so gerichteten Strahlung mit Hilfe von mehreren teildurchlässigen Spiegeln eine Strahlungsabzweigung vornimmt und diese dann in vorbestimmter Weise auf gewünschte Stellen richtet. Hierdurch kann man ein optisch ansprechendes Strahlungsleitsystem, insbesondere Beleuchtungssystem, schaffen, welches äußerst flexibel ist und sich energiesparend sowie wartungsfreundlich betreiben läßt.

Weitere Einzelheiten, Merkmale und Vorteile der Erfindung ergeben sich aus der nachstehenden Beschreibung von bevorzugten Ausführungsformen unter Bezugnahme auf die beigefügte Zeichnung. Darin zeigt:
Figur 1 eine perspektivische schematische Ansicht einer Grundbauform eines Strahlungsverteilerelementes mit seinen Einzelheiten,
Figur 2 eine schematische Ansicht zur Verdeutlichung eines Anwendungsbeispieles einer Strahlengangführung bei dem erfindungsgemäßen Strahlungsleitsystem unter Einsatz eines Strahlungsverteilerelementes, welches beispielsweise nach Figur 1 ausgelegt ist.
Figur 3 eine schematische Ansicht einer Ausführungsform eines Strahlungsleitsystems nach der Erfindung, bei dem beispielsweise drei Strahlungsverteilelemente beabstandet über den Verlauf der parallel gerichteten Strahlung angerichtet sind, und
Figur 4 eine Ansicht einer weiteren bevorzugten Ausführungsform eines Strahlungsleitsystems, bei dem die mit Hilfe der Strahlungsverteilelemente abgezweigte Strahlung beispielsweise gebündelt auf einen vorbestimmten Bereich von verschiedenen Seiten aus her gerichtet wird.

Selbstverständlich sind die in der Zeichnung dargestellten Beispiele nur als bevorzugte Ausführungsform anzusehen und es sind zahlreiche Modifikationen und Abänderungen möglich, welche dazu führen, daß das erfindungsgemäße Strahlungsleitsystem hinsichtlich des Einsatzes und der konkreten Auslegungsform nahezu universell variabel ist.

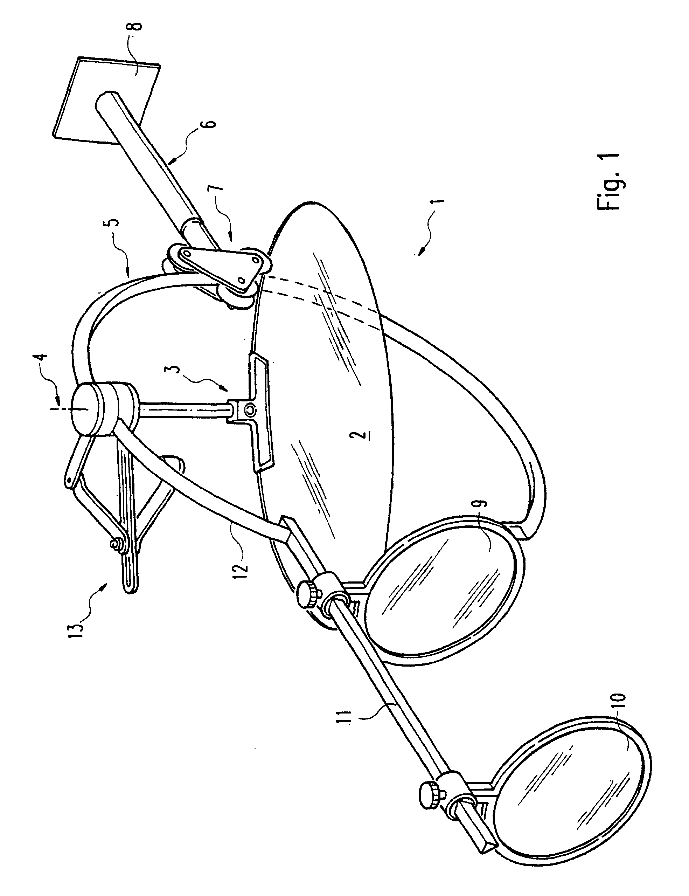

In Figur 1 ist in einer perspektivischen Ansicht ein insgesamt mit 1 bezeichnetes Strahlungsverteilerelement dargestellt. Ein wesentlicher Bestandteil dieses Strahlungsverteilelementes 1 ist ein teildurchlässiger Spiegel 2, welcher auswechselbar in einer Spiegelhalterung 3 aufgenommen ist. Die Durchlässigkeit des teildurchlässigen Spiegels 2 läßt sich variieren und hiervon abhängig ist der aus der Grundstrahlung abgezweigte Anteil der Strahlung wählbar. Durch die Austauschbarkeit des teildurchlässigen Spiegels 2 kann man diesen auf einfache Weise gegen einen teildurchlässigen Spiegel mit einem anderen Durchlässigkeitsgrad auswechseln, so daß man größere oder kleinere Anteile aus der von einer Strahlungsquelle kommenden Strahlung mittels des Strahlungsverteilerelementes 1 abzweigen kann.

Der teildurchlässige Spiegel 2 ist um eine Drehachse 4 etwa senkrecht zur Strahlungsachse drehbar. Die Drehlagerung des teildurchlässigen Spiegels 2 ist mit einer Trag- und Führungseinrichtung 5 verbunden, welche kreisbogenförmig ausgebildet und insbesondere etwa halbkreisförmig gestaltet ist. Zweckmäßigerweise wird diese Trag- und Führungseinrichtung 5 von einem Dreieckprofilmaterial gebildet. Diese Trag- und Führungseinrichtung 5 ermöglicht, daß der teildurchlässige Spiegel 2 über einen Schwenkbogen hinweg verschwenkt werden kann, wobei der Schwenkbogen die gesamte Strahlbreite der parallel gerichteten Strahlung umgreift, so daß eine nahezu universelle Positionierung des teildurchlässigen Spiegels 2 bezüglich des Strahlenganges und der Strahlungsachse 14 möglich ist. Mittels einer Teleskopverbindung 6 ist diese Tragund Führungseinrichtung 5 vorzugsweise unter Einsatz einer Exzentereinrichtung 7 in einem veränderbaren Abstand zu einer Festfläche 8 und in einer jeweils variierbaren und vorbestimmten Position montierbarer. Die Festfläche kann beispielsweise von einer Wand, Decke oder dergleichen gebildet werden. Mit Hilfe der Teleskopverbindung 6 wird eine Feinjustierung des Strahlungsverteilerelementes 1 ermöglicht.

Bei der in Figur 1 dargestellten bevorzugten Grundausführungsform eines Strahlungsverteilerelementes 1 sind dem teildurchlässigen Spiegel 2 optische Elemente 9, 10 nachgeschaltet, welche in vorbestimmtem Abstand variierbar angeordnet werden können. Diese optischen Elemente 9, 10 sind an einem hierfür vorgesehenen Träger 11 verstellbar gelagert, welcher beispielsweise als Aufnahmeschiene ausgebildet ist. Vorzugsweise hat auch diese Aufnahmeschiene ein Dreieckprofil. Dieser Träger 11 umfaßt ferner einen Bügel, welcher mit der Drehlagerung im Bereich der Drehachse 4 des teildurchlässigen Spiegels 2 verbunden ist. Der Bügel 12 ist mit der Drehlagerung des teildurchlässigen Spiegels 2 über eine Mechanik 13 verbunden, welche in Form eines Hebelgestänges ausgebildet ist.

Durch diese voranstehend erläuterten Auslegungseinzelheiten werden die Drehlagerung (Drehachse 4) für den teildurchlässigen Spiegel 2 und der Träger 11 für die nachgeschalteten optischen Elemente 9, 10 zu einer Funktionseinheit zusammengefaßt, welche aber auch eine körperliche Einheit bildet. Die Kopplung über die Mechanik 13 erlaubt insbesondere, daß der Träger 11 für die optischen Elemente 9, 10 unter entsprechender Zuordnung zur Drehstellung des teildurchlässigen Spiegels 2 mit dessen Drehlagerung bewegungsgekoppelt derart verbunden wird, daß die nachgeschalteten, optischen Elemente 9, 10, wie Linsen, bei denen es sich um Streulinsen, Fokussierungslinsen, Dias, Filter, wie Farbfilter oder dergleichen handeln kann, immer automatisch im richtigen Winkel (d.h. nach Maßgabe des Ausfallwinkels) zueinander in geführter Weise bewegt werden und somit eine automatische Abstimmung der nachgeschalteten optischen Elemente 9, 10 auf die jeweilige Lage des teildurchlässigen Spiegels 2 erfolgt. Hierdurch lassen sich Einzeljustierarbeiten vermeiden und insbesondere läßt sich auch die Einjustierung des Strahlungsverteilerelementes wesentlich erleichtern.

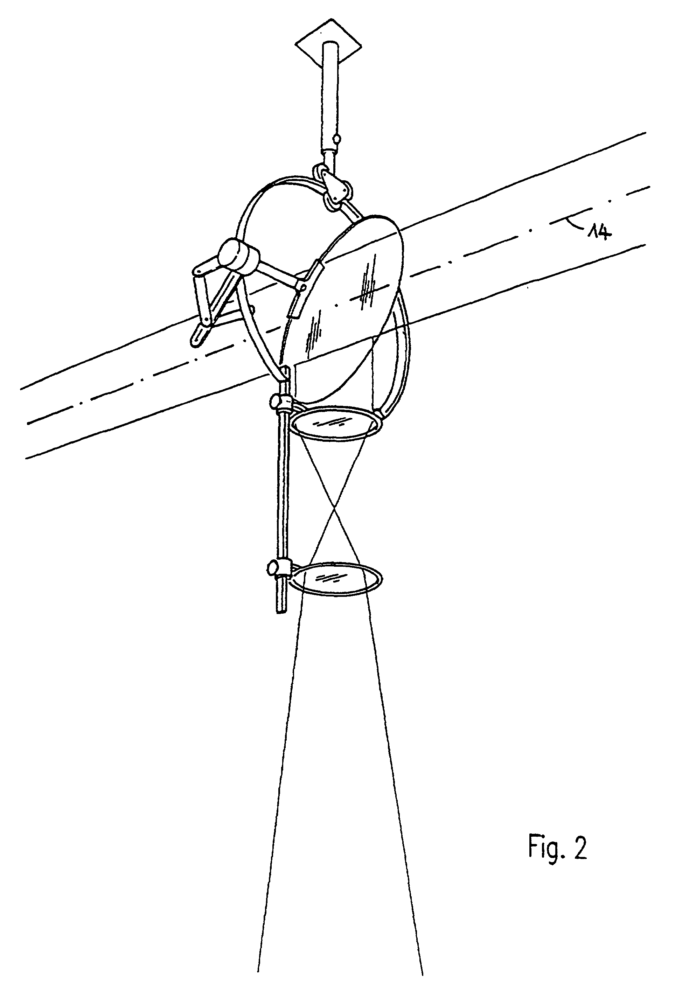

In Figur 2 ist beispielsweise ein wie in Figur 1 hinsichtlich seinen Einzelheiten näher erläutertes Strahlungsverteilerelement 1 im Strahlengang 16 einer Strahlung, wie eines Lichtstrahls als Anwendungsbeispiel, angeordnet, mittels welchem ein Teil der Strahlung abgezweigt wird, welcher von einer nicht näher dargestellten Strahlungsquelle, wie einer Hochleistungs-Lichtquelle in parallel gerichteter Form kommt. Als nicht näher dargestellte Hochleistungs-Lichtquelle kann beispielsweise eine Bogenlampe bei einem Beleuchtungssystem vorgesehen werden, welche insbesondere von einer Halogen-Metall-Dampflampe, einer Argon-Schwefel-Lampe oder dergleichen gebildet wird. Auch kann gegebenenfalls Sonnenlicht eingespeist werden.

Wie aus Figur 2 zu ersehen ist, wird mittels des Strahlungsverteilerelementes 1 und des dort vorgesehenen teildurchlässigen Spiegels 2 ein entsprechender Anteil der parallel gerichteten Strahlung aus dem Strahlengang 16 abgezweigt und über die an dem Träger 11 angeordneten optischen Elemente 9, 10 in vorbestimmter Weise auf eine gewünschte Stelle gerichtet. Als Beispiel ist dort ein Strahlungsverteilerelement 1 verdeutlicht, welches an einer Deckenfläche als Festfläche 8 abgehängt ist.

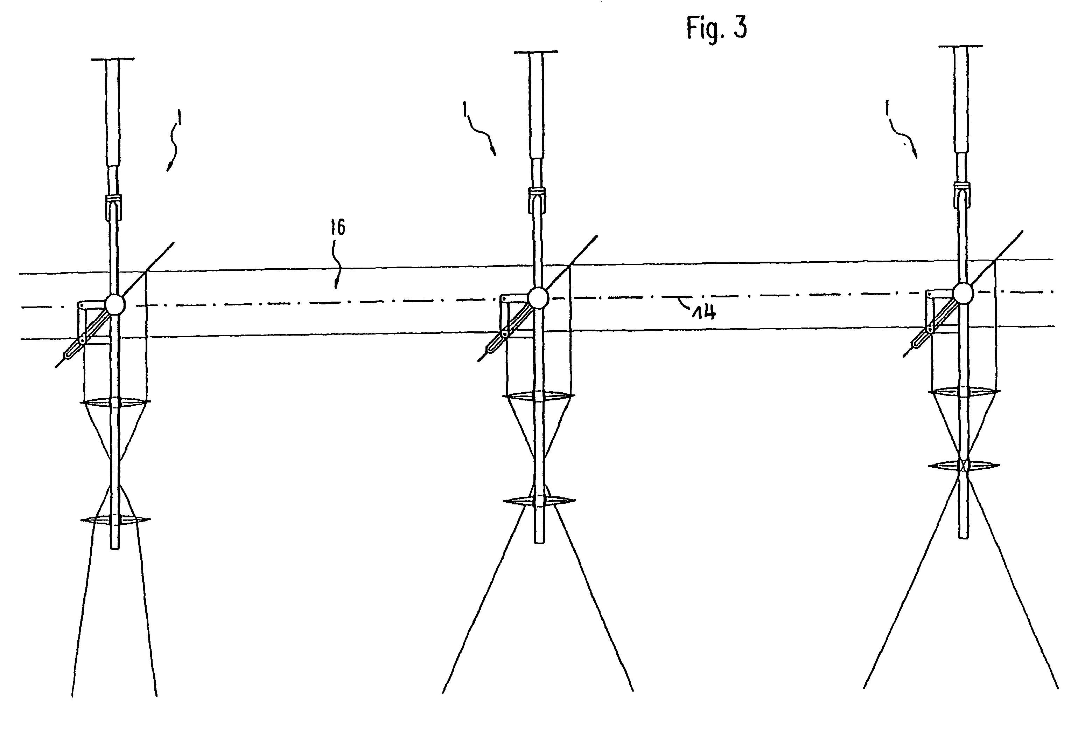

Aus Figur 3 ist eine Anordnung zu ersehen, welche mehrere Strahlungsverteilerelemente 1 umfaßt, welche zuvor beispielsweise anhand von Figur 1 in einer Grundausführungsform erläutert worden sind. Diese Strahlungsverteilerelemente 1 sind beabstandet in Längsrichtung des Strahlengangs 16 angeordnet und mit Hilfe der jeweils den Strahlungsverteilerelementen zugeordneten teildurchlässigen Spiegeln wird ein entsprechend gewünschter Anteil der Strahlung abgezweigt und ggfs. über die vorgesehenen optischen Elemente 9, 10 zu einer gewünschten Stelle im Raum gerichtet, wobei bei der Darstellung in Figur 3 mehrere auszuleuchtende Stellen ebenfalls beabstandet liegen. Mit Hilfe einer solchen Anordnung lassen sich ggfs. auch Dias und Schriftzüge ausleuchten und sie lassen sich mit einer nachgeschalteten Linse als optisches Element abbilden. In ähnlicher Weise lassen sich auch Farbfilter einsetzen, so daß man farbliche Effekte mit einem solchen Strahlungsleitsystem in gewünschter Weise erzielen kann.

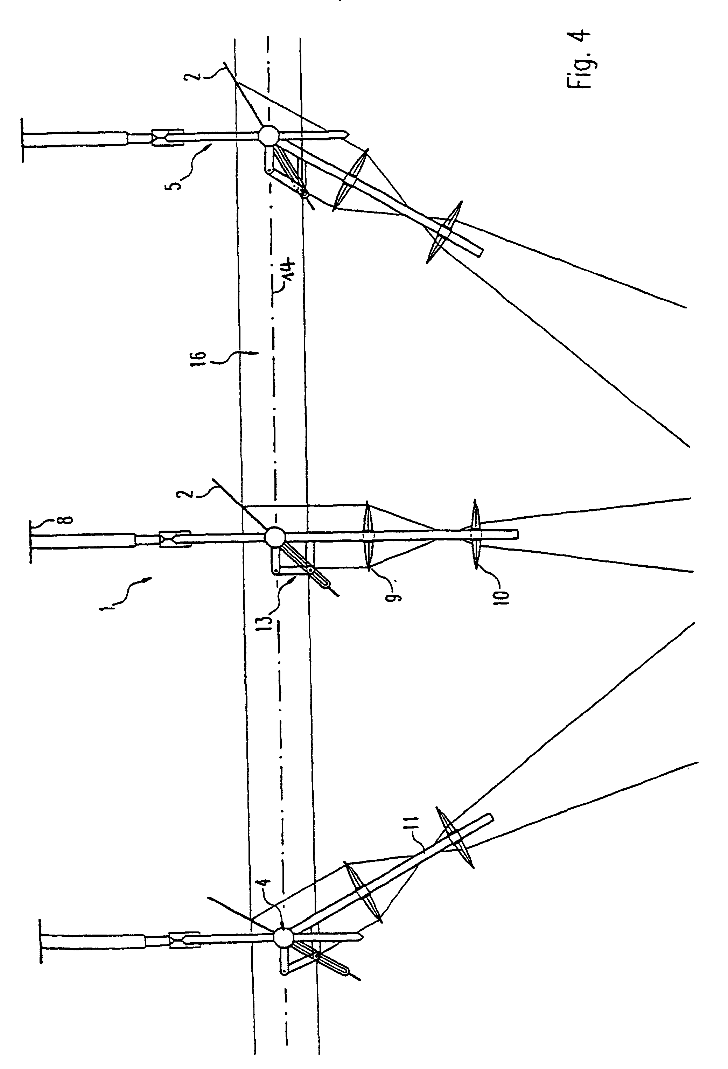

In Figur 4 ist eine weitere Auslegungsform als Anwendungsbeispiel eines Strahlungsleitsystems gezeigt, welches ebenfalls mehrere Strahlungsverteilerelemente 1 umfaßt, welche voranstehend bereits erläutert worden sind. Hieraus ist zu ersehen, daß mit Hilfe des Strahlungsverteilerelementes 1 ein fast halbkugelgroßer Bereich durch entsprechende Schwenkbewegungen um die beiden senkrecht zueinander stehenden Achsen erfaßt werden kann und daß hierbei der teildurchlässige Spiegel 2 und die ggfs. nachgeschalteten optischen Elemente 9, 10 immer in gewünschter Zuordnung zueinander mitgeführt werden, was mit Hilfe der bewegungsgekoppelten Verbindung erzielt wird, welche voranstehend erläutert worden ist.

Selbstverständlich handelt es sich bei den voranstehend beschriebenen Ausführungsformen nur um eine kleine Auswahl von Beispielen, welche in beliebiger Weise abgewandelt und unter Berücksichtigung der Erfordernisse angepaßt werden können.

Wesentlich bei dem erfindungsgemäßen Strahlungsleitsystem ist es, daß nicht zu jedem Beleuchtungskörper oder Leuchtmittel eine elektrische Stromzuführung erfolgt, sondern daß man eine gemeinsame einzige Strahlungsquelle, wie eine Lichtquelle hat, welche eine parallel gerichtete Strahlung, beispielsweise einen Lichtstrahl liefert, wobei aus dieser gerichteten Strahlung mit Hilfe von einem oder mehreren teildurchlässigen Spiegeln 2 unter Einsatz eines Strahlungsverteilerelementes 1 eine entsprechende Strahlungsabzweigung erfolgt, welche dann mit Hilfe von ggfs. vorgesehenen optischen Elementen 9, 10 in der gewünschten Weise gelenkt und gerichtet werden können. Somit kommen die einzelnen Strahlungsverteilerelemente 1 ohne eine gesonderte Stromversorgung aus, so daß sich dieses Strahlungsleitsystem auch in günstiger Weise im Großraumbereich einsetzen läßt. Im Falle der Anwendung auf ein Beleuchtungssystem lassen sich mit Hilfe dieses Systems ganze Hallen oder Stockwerke ausleuchten, und man erhält eine gute Lichtqualität mit einer ausgezeichneten Farbwiedergabe. Gegebenenfalls kann in das erfindungsgemäße Strahlungsleitsystem auch noch Tageslicht, wie Sonnenlicht, eingespeist werden, wozu entsprechende Einrichtungen im Bereich der Strahlungsquelle selbstverständlich vorgesehen werden müssen.

Die Erfindung ist nicht auf die voranstehend beschriebenen Einzelheiten beschränkt, sondern es sind zahlreiche Abänderungen und Modifikationen möglich, die der Fachmann im Bedarfsfall treffen wird, ohne den Erfindungsgedanken zu verlassen.

### Bezugszeichen

- 1: Strahlungsverteilerelement insgesamt
- 2: teildurchlässiger Spiegel
- 3: Spiegelhalterung
- 4: Drehachse
- 5: Trag- und Führungseinrichtung
- 6: Teleskopverbindung
- 7: Exzentereinrichtung
- 8: Festfläche
- 9: optisches Element
- 10: optisches Element
- 11: Träger für optische Elemente 9, 10
- 12: Bügel
- 13: Mechanik
- 16: Strahlengang

## Patentansprüche

1. Strahlungsleitsystem, insbesondere Beleuchtungssystem, mit wenigstens einer Strahlungsquelle, insbesondere Lichtquelle, welche eine parallel gerichtete Strahlung, insbesondere einen Lichtstrahl abgibt, bei dem im Strahlengang (16) der Strahlungsquelle mehrere teildurchlässige Spiegel (2) als Strahlungsverteilerelemente (1) beabstandet angeordnet sind, welche einen Teil der Strahlung, insbesondere des Lichts an vorbestimmte, gewünschte Stellen richten, **dadurch gekennzeichnet, daß** die teildurchlässigen Spiegel (2) vorzugsweise auswechselbar und daß sie um die Strahlungsachse (14) der Strahlungsquelle verdrehbar sind.

2. Strahlungsleitsystem nach Anspruch 1, **dadurch gekennzeichnet, daß** jedem teildurchlässigen Spiegel (2) wenigstens ein ggfs. auswechselbares, optisches Element (9, 10), wie eine Linse, Filter, Dia oder dergleichen, nachgeschaltet ist.

3. Strahlungsleitsystem nach Anspruch 1 oder 2, **dadurch gekennzeichnet, daß** der jeweilige teildurchlässige Spiegel (2) um eine zweite Achse senkrecht zur Strahlungsachse drehbar und im Winkel hierzu variierbar ist.

4. Strahlungsleitsystem nach einem der Ansprüche 1 bis 3, **dadurch gekennzeichnet, daß** zur Verdrehung des jeweiligen teildurchlässigen Spiegels (2) um die Strahlungsachse eine kreisbogenförmige, vorzugsweise etwa halbkreisförmig ausgebildete Trag- und Führungseinrichtung (5) vorgesehen ist.

5. Strahlungsleitsystem nach Anspruch 4, **dadurch gekennzeichnet, daß** die Trag - und Führungseinrichtung (5), vorzugsweise über eine Teleskopverbindung (6), an einer Festfläche (8), wie einer Wand, Decke oder dergleichen, montierbar ist.

6. Strahlungsleitsystem nach Anspruch 5, **dadurch gekennzeichnet, daß** die Teleskopverbindung (6) mittels einer Exzentereinrichtung (7) exzentrisch an der kreisbogenförmig ausgebildeten Trag- und Führungseinrichtung (5) angreift und daß die Exzentereinrichtung (7) die Fixierung von Teleskopverbindung (6) und Trag- und Führungseinrichtung (5) in ihrer jeweiligen Position erlaubt.

7. Strahlungsleitsystem nach einem der Ansprüche 2 bis 6, **dadurch gekennzeichnet, daß** die dem teildurchlässigen Spiegel (2) nachgeschalteten, optischen Elemente (9, 10) an einem Träger (11) verstellbar gelagert sind.

8. Strahlungsleitsystem nach Anspruch 7, **dadurch gekennzeichnet, daß** der Träger (11) als Aufnahmeschiene ausgebildet ist.

9. Strahlungsleitsystem nach Anspruch 7 oder 8, **dadurch gekennzeichnet, daß** die Drehlagerung für den teildurchlässigen Spiegel (2) und der Träger (11) für die nachgeschalteten optischen Elemente (9, 10) zu einer Funktionseinheit zusammengefaßt sind.

10. Strahlungsleitsystem nach einem der Ansprüche 7 bis 9, **dadurch gekennzeichnet, daß** der Träger (11) für die optischen Elemente (9, 10) über eine Mechanik (13) unter entsprechender Zuordnung zur Drehstellung des teildurchlässigen Spiegels (2) mit dessen Drehlagerung bewegungsgekoppelt ist.

11. Strahlungsleitsystem nach einem der vorangehenden Ansprüche, **dadurch gekennzeichnet, daß** als Strahlungsquelle eine Hochleistungs-Lichtquelle vorgesehen ist, welche vorzugsweise von einer Bogenlampe, insbesondere einer Halogen-Metalldampflampe, Argon-Schwefel-Lampe oder dergleichen gebildet wird.

12. Strahlungsleitsystem nach einem der Ansprüche 1 bis 10, **dadurch gekennzeichnet, daß** als Strahlungsquelle eine Infrarotlichtquelle oder dergleichen vorgesehen ist.

13. Strahlungsleitsystem nach einem der Ansprüche 1 bis 10, **dadurch gekennzeichnet, daß** als Strahlungsquelle Sonnenlicht genutzt wird.

## Claims

1. Radiation-deflecting system, in particular lighting system, having at least one radiation source, in particular light source, which emits parallel radiation, in particular a light beam, in which system there are arranged, spaced apart in the path of radiation (16) of the radiation source, a plurality of partially transparent mirrors (2) as radiation-distributing elements (1) which direct a portion of the radiation, in particular of the light, to predetermined desired locations, **characterised in that** the partially transparent mirrors (2) are preferably exchangeable and **in that** they can be rotated about the radiation axis (14) of the radiation source.

2. Radiation-deflecting system according to claim 1, **characterised in that** downstream of each partially transparent mirror (2) there is at least one optical element (9, 10), which, if applicable, is exchangeable, such as a lens, filter, slide or the like.

3. Radiation-deflecting system according to claim 1 or 2, **characterised in that** the respective partially transparent mirror (2) is rotatable about a second axis perpendicular to the radiation axis, and can be varied in the angle thereto.

4. Radiation-deflecting system according to any of claims 1 to 3, **characterised in that** a supporting and guiding device (5), which is formed as an arc of a circle, preferably to be substantially semicircular, is provided for the purpose of rotating the respective partially transparent mirror (2) about the radiation axis.

5. Radiation-deflecting system according to claim 4, **characterised in that** the supporting and guiding device (5) can be mounted on a fixed surface (8), such as a wall, ceiling or the like, preferably by way of a telescopic connection (6).

6. Radiation-deflecting system according to claim 5, **characterised in that** the telescopic connection (6) engages eccentrically on the supporting and guiding device (5), formed as an arc of a circle, by means of an eccentric device (7), and **in that** the eccentric device (7) allows the fixing of the telescopic connection (6) and supporting and guiding device (5) in their respective position.

7. Radiation-deflecting system according to any of claims 2 to 6, **characterised in that** the optical elements (9, 10), downstream of the partially transparent mirror (2), are mounted on a support (11) in an adjustable manner.

8. Radiation-deflecting system according to claim 7, **characterised in that** the support (11) is formed as a receiving rail.

9. Radiation-deflecting system according to claim 7 or 8, **characterised in that** the rotational mounting for the partially transparent mirror (2) and the support (11) for the optical elements (9, 10) downstream thereof are combined to form a functional unit.

10. Radiation-deflecting system according to any of claims 7 to 9, **characterised in that** the support (11) for the optical elements (9, 10) is coupled in terms of movement with the rotational mounting of the partially transparent mirror (2) by way of a mechanical system (13) with corresponding coordination with the rotational position of said partially transparent mirror (2).

11. Radiation-deflecting system according to any preceding claim, **characterised in that** a high-intensity light source is provided as the radiation source, which light source is preferably formed by an arc lamp, in particular a metal-halide lamp, an argon-sulphur lamp or the like.

12. Radiation-deflecting system according to any of claims 1 to 10, **characterised in that** an infrared light source or the like is provided as the radiation source.

13. Radiation-deflecting system according to any of claims 1 to 10, **characterised in that** sunlight is used as the radiation source.

## Revendications

1. Système de guidage de rayonnement, en particulier système d'éclairage, comportant au moins une source de rayonnement, en particulier une source lumineuse, qui fournit un rayonnement orienté parallèle, en particulier un rayon lumineux, dans lequel plusieurs miroirs (2) semi-transparents sont agencés avec espacement en tant qu'éléments de répartition de rayonnement dans la trajectoire des rayonnements de la source de rayonnement, lesdits miroirs dirigeant une partie du rayonnement, en particulier de la lumière, vers des points souhaités prédéterminés, **caractérisé en ce que** les miroirs (2) semi-transparents sont de préférence interchangeables et **en ce qu'**ils sont rotatifs autour de l'axe de rayonnement (14) de la source de rayonnement.

2. Système de guidage de rayonnement selon la revendication 1, **caractérisé en ce qu'**en aval de chaque miroir (2) semi-transparent est monté au moins un élément optique (9, 10) éventuellement interchangeable tel qu'une lentille, un filtre, une diapositive ou similaire.

3. Système de guidage de rayonnement selon l'une ou l'autre des revendications 1 et 2, **caractérisé en ce que** le miroir (2) semi-transparent respectif est rotatif autour d'un deuxième axe perpendiculairement à l'axe de rayonnement, et est variable par rapport à celui-ci quant à son angle.

4. Système de guidage de rayonnement selon l'une quelconque des revendications 1 à 3, **caractérisé en ce que** pour faire tourner le miroir (2) semi-transparent respectif autour de l'axe de rayonnement, il est prévu un dispositif de support et de guidage (5) réalisé en forme d'arc de cercle, de préférence approximativement en forme de demi-cercle.

5. Système de rayonnement selon la revendication 4, **caractérisé en ce que** le dispositif de support et de guidage (5) peut être montré de préférence par l'intermédiaire d'une liaison télescopique (6) sur une surface fixe (8) telle qu'un mur, un plafond ou similaire.

6. Système de rayonnement selon la revendication 5, **caractérisé en ce que** la liaison télescopique engage de manière excentrée le dispositif de support et de guidage (5) en forme d'arc de cercle, au moyen d'un dispositif à excentrique (7), et **en ce que** le dispositif à excentrique (7) permet la fixation de la liaison télescopique (6) et du dispositif de support et de guidage (5) dans leur position respective.

7. Système de rayonnement selon l'une quelconque des revendications 2 à 6, **caractérisé en ce que** les éléments optiques (9, 10) montés en aval du miroir (2) semi-transparent sont montés réglables sur un support (11).

8. Système de rayonnement selon la revendication 7, **caractérisé en ce que** le support (11) est réalisé sous forme de rail de réception.

9. Système de guidage de rayonnement selon l'une ou l'autre des revendications 7 et 8, **caractérisé en ce que** le palier rotatif pour le miroir (2) semi-transparent et le support (11) pour les éléments optiques (9, 10) montés en aval sont rassemblés pour former une unité fonctionnelle.

10. Système de rayonnement selon l'une quelconque des revendications 7 à 9, **caractérisé en ce que** le support (11) pour les éléments optiques (9, 10) est accouplé dans ses mouvements via un mécanisme (13) avec le palier rotatif du miroir (2), avec association correspondante par rapport à la position en rotation du miroir (2) semi-transparent.

11. Système de rayonnement selon l'une quelconque des revendications précédentes, **caractérisé en ce qu'**il est prévu en tant que source de rayonnement une source lumineuse à haute puissance qui est formée de préférence par une lampe à arc, en particulier par une lampe à vapeur métallique-halogène, une lampe à argon-soufre ou similaire.

12. Système de rayonnement selon l'une quelconque des revendications 1 à 10, **caractérisé en ce qu'**il est prévu en tant que source de rayonnement une source à infrarouges ou similaire.

13. Système de rayonnement selon l'une quelconque des revendications 1 à 10, **caractérisé en ce qu'**il est prévu en tant que source de rayonnement de la lumière solaire.
